# EUROPEAN PATENT APPLICATION

(11) **EP 4 596 513 A1**
(43) Date of publication of application: **06.08.2025**
(21) Application number: 23872559.2
(22) Date of filing: 28.09.2023
(51) Int. Cl.: C03C 27/12, B32B 3/30, B32B 7/02, B32B 17/10, B32B 27/00, B60J 1/00, B60J 1/02

(54) **INTERMEDIATE FILM FOR LAMINATED GLASS AND LAMINATED GLASS**

(30) Priority: 30.09.2022 JP 2022158985
(71) Applicant: SEKISUI CHEMICAL CO., LTD., Osaka-shi Osaka 530-8565 (JP)
(72) Inventor: ISHIDA, Jun, 6045JB Roermond (NL)
(74) Representative: Ter Meer Steinmeister & Partner
(86) International application number: PCT/JP2023/035518
(87) International publication number: WO 2024/071339

(57) **Abstract**

An interlayer film for laminated glass of the present invention has five or more resin layers, includes a first resin layer having a glass transition temperature of 15°C or higher, and a second resin layer having a glass transition temperature of lower than 15°C, the interlayer film for laminated glass has one edge and the other edge opposite to the one edge, a thickness of the other edge is larger than the thickness of the one edge, and when a percentage of a total thickness of second resin layer with respect to the total thickness of all the resin layers is taken to be a layer percentage A (%), and a distance from the one edge to the other edge is taken to be X, the interlayer film for laminated glass has a region of 0.5X in which a difference between a maximum value and a minimum value of the layer percentage A is 10% or less. According to the present invention, a wedge-shaped interlayer film having good sound insulation performance can be provided.

## Description

### Technical Field

The present invention relates to an interlayer film for laminated glass and laminated glass.

### Background Art

Laminated glass is safe and does not cause glass shards to scatter even if damaged by an external impact, and is thus widely used for the window glass of a vehicle such as an automobile, a railway carriage, an aircraft, and a ship, or for the window glass of a building. Laminated glass in which generally an interlayer film for laminated glass formed of a thermoplastic resin is interposed between a pair of glass sheets and integrated is widely known.

Among such laminated glass, there is a high demand for laminated glass having sound insulation properties, and attempts have been made to increase the sound insulation performance of laminated glass by using an interlayer film for laminated glass that is formed by laminating a plurality of resin layers.

For example, PTL 1 discloses an interlayer film for laminated glass having a structure of two or more layers, in which the interlayer film includes a resin layer, a glass transition temperature is -10°C or more and 0°C or less, a tan δ at the glass transition temperature is 2.5 or more, and a storage elastic modulus at -5°C is 3.0×10⁴ Pa or more and 5.0×10⁶ Pa or less. It is also described that the sound insulation properties can be increased over a wide temperature range.

In addition, PTL 2 discloses an interlayer film for a head-up display (HUD) device that uses a high-performance windshield of sound insulation glass or the like having a multilayer interlayer film, wherein the interlayer film has a shape in which the thickness of the other is larger than the thickness of one edge (has a so-called "wedge-shape") as an interlayer film that does not cause double images. An HUD is a device that displays various information such as a map, traveling speed, and vehicle status in the field of vision of the driver by reflecting an image on the windshield of the vehicle.

### Citation List

### Patent Literature

PTL 1: WO 2019/151329 A1
PTL 2: JP 2007-223883 A

### Summary of Invention

### Technical Problem

Generally, it is known to use a wedge-shaped interlayer film from the viewpoint of preventing double images in a HUD. However, if such a wedge-shaped interlayer film is made to include a plurality of resin layers in order to provide sound insulation performance, the sound insulation effect will differ depending on the width direction of the laminated glass, and depending on the location there may be portions where a sound insulation effect is not exerted. In other words, wedge-shaped interlayer films for laminated glass tend to fail to achieve the desired sound insulation effect, and so there is a problem in that the sound insulation performance is inferior.

Accordingly, an object of the present invention is to provide a wedge-shaped interlayer film that has excellent sound insulation performance.

### Solution to Problem

As a result of extensive studies, the present inventor has found that the above-described problem can be solved by the following configurations, thereby completing the present invention. That is, the gist of the present invention is as follows.
[1] An interlayer film for laminated glass that comprises five or more resin layers, comprising:
   a first resin layer having a glass transition temperature of 15°C or higher; and
   a second resin layer having a glass transition temperature of lower than 15°C,
   the interlayer film having one edge and the other edge opposite to the one edge,
   a thickness of the other edge being larger than the thickness of the one edge, and
   when a percentage of a total thickness of second resin layer with respect to the total thickness of all the resin layers is taken to be a layer percentage A (%), and a distance from the one edge to the other edge is taken to be X, the interlayer film for laminated glass comprising a region of 0.5X in which a difference between a maximum value and a minimum value of the layer percentage A is 10% or less.
[2] The interlayer film for laminated glass according to the above [1], wherein the thickness of at least one first resin layer changes linearly or non-linearly in the direction from the one edge to the other edge.
[3] The interlayer film for laminated glass according to the above [1] or [2], wherein at least one first resin layer comprises a portion having a thickness of less than 300 µm.
[4] The interlayer film for laminated glass according to any of the above [1] to [3], wherein at least one second resin layer comprises a portion having a thickness of 40 µm or more.
[5] The interlayer film for laminated glass according to any of the above [1] to [4], wherein a layer structure is symmetrical or asymmetrical in the thickness direction.
[6] The interlayer film for laminated glass according to any of the above [1] to [5], wherein the thickness of at least one resin layer is smaller at the other edge than at the one edge.
[7] The interlayer film for laminated glass according to any of the above [1] to [6], wherein a front surface comprises embossments having a random or continuous uneven shape, and the embossments have a ten-point average roughness (Rzjis94) of 1 µm or more and less than 100 µm.
[8] The interlayer film for laminated glass according to any of the above [1] to [7], wherein the interlayer film comprises a structure of five or more layers in which the first resin layers and the second resin layers are alternately laminated.
[9] The interlayer film for laminated glass according to any of the above [1] to [8], wherein the first resin layer is present on the front surface and a back surface.
[10] An interlayer film for laminated glass that comprises five or more resin layers,
   the interlayer film having one edge and the other edge opposite to the one edge,
   a thickness of the other edge being larger than the thickness of the one edge, and
   when a distance from the one edge to the other edge is taken as X, an absolute value of a difference between a maximum value and a minimum value of a primary resonance frequency at 20°C measured by mechanical impedance measurement (MIM) at positions of 0.25X, 0.5X, and 0.75X being 70 Hz or less.
[11] Laminated glass including:
   a first laminated glass member;
   a second laminated glass member; and
   the interlayer film for laminated glass according to any of the above [1] to [8], wherein
   the interlayer film for laminated glass is arranged between the first laminated glass member and the second laminated glass member.

### Advantageous Effects of Invention

According to the present invention, a wedge-shaped interlayer film having an excellent sound insulation performance can be provided.

### Brief Description of Drawings

[Fig. 1] Fig. 1 is a schematic cross-sectional view showing an embodiment of an interlayer film for laminated glass of the present invention.
[Fig. 2] Fig. 2 is a cross-sectional view of an interlayer film for laminated glass for illustrating parameters of the present invention.
[Fig. 3] Fig. 3 is a cross-sectional view of an interlayer film for laminated glass for illustrating parameters of the present invention.
[Fig. 4] Fig. 4 is a schematic cross-sectional view showing another embodiment of the interlayer film for laminated glass of the present invention.
[Fig. 5] Fig. 5 is a schematic cross-sectional view showing another embodiment of the interlayer film for laminated glass of the present invention.
[Fig. 6] Fig. 6 is a schematic cross-sectional view showing another embodiment of the interlayer film for laminated glass of the present invention.
[Fig. 7] Fig. 7 is a schematic cross-sectional view showing another embodiment of the interlayer film for laminated glass of the present invention.
[Fig. 8] Fig. 8 is a schematic cross-sectional view showing a wedge angle of the interlayer film for laminated glass of the present invention.
[Fig. 9] Fig. 9 is a schematic cross-sectional view of the interlayer film for laminated glass of Comparative Example 1.
[Fig. 10] Fig. 10 is a schematic cross-sectional view of the interlayer film for laminated glass of Comparative Example 2.
[Fig. 11] Fig. 11 is a schematic cross-sectional view of the interlayer film for laminated glass of Comparative Example 3.
[Fig. 12] Fig. 12 is a schematic cross-sectional view of the interlayer film for laminated glass of Comparative Example 4.

### Description of Embodiments

Hereinafter, the present invention will be described in more detail with reference to embodiments.

### [Interlayer film for laminated glass]

The interlayer film for laminated glass of the present invention has five or more resin layers, including a first resin layer having a glass transition temperature of 15°C or higher and a second resin layer having a glass transition temperature of lower than 15°C, wherein the interlayer film for laminated glass has one edge and the other edge opposite to the one edge, and a thickness of the other edge is larger than the thickness of the one edge. Further, when a percentage of a total thickness of second resin layer with respect to the total thickness of all the resin layers is taken to be a layer percentage A (%), and a distance from the one edge to the other edge is taken to be X, the interlayer film for laminated glass of the present invention has a region of 0.5X in which a difference between a maximum value and a minimum value of the layer percentage A is 10% or less.

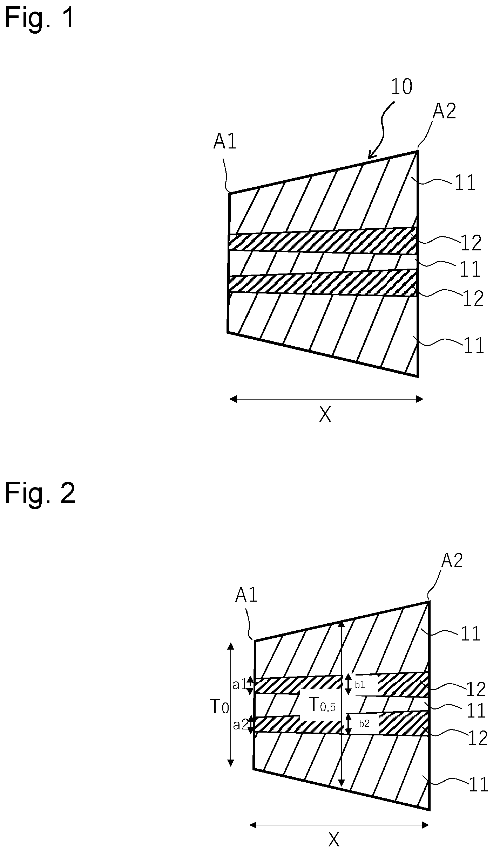

An embodiment of the present invention will be described with reference to the drawings. It is noted that the present invention is not limited to the contents of the drawings. Fig. 1 is a cross-sectional view schematically showing an embodiment of the interlayer film for laminated glass of the present invention.

An interlayer film 10 for laminated glass in Fig. 1 has one edge A1 and the other edge A2 opposite to the one edge A1, and the thickness of the other edge A2 is larger than the thickness of the one edge A1. A shape in which the thickness of the other edge is larger than the thickness of one edge in this way may in this specification be referred to as a "wedge shape". For example, laminated glass having a wedge-shaped interlayer film for laminated glass is suitable for use in vehicle head-up displays and the like because double images can be easily suppressed.

In Fig. 1, a wedge-shaped interlayer film for laminated glass having a trapezoidal cross section is shown, but the cross section may have a shape other than trapezoid. In Fig. 1, the thickness of the interlayer film for laminated glass increases from the one edge to the other edge in the width direction, but the rate of increase in thickness does not have to be constant, and there may be a portion where the rate of increase in thickness decreases or a part where the thickness is constant.

The interlayer film 10 for laminated glass has a five-layer structure in which, from the front side, a first resin layer 11, a second resin layer 12, a first resin layer 11, a second resin layer 12, and a first resin layer 11 are laminated in that order. As used herein, the topmost portion of the cross-sectional view is referred to as the "front surface", and the bottommost portion of the cross-sectional view is referred to as the "back surface".

Each second resin layer 12 is a layer having a glass transition temperature of lower than 15°C. Since the interlayer film 10 for laminated glass includes the second resin layers 12, sound insulation properties are enhanced. Further, each first resin layer 11 is a layer having a glass transition temperature of 15°C or higher. The first resin layer 11 properly protect the second resin layer 12, which are a relatively soft layer, so that the handleability of the interlayer film for laminated glass is also enhanced while maintaining sound insulation performance. An interlayer film for laminated glass having a total of five or more layers of the first resin layers and the second resin layers has better sound insulation properties. In particular, as shown in Fig. 1, in the case of a five-layer structure in which the first resin layers are present on the front surface and the back surface, and the first resin layers and the second resin layers are alternately laminated, the sound insulation properties are excellent and the second resin layers are suitably protected, so that the sound insulation performance is maintained, and thus such a configuration is preferable.

The interlayer film 10 for laminated glass shown in Fig. 1 has a total of five resin layers, three first resin layers and two second resin layers, but five or more layers may be included.

Further, the number of first resin layers and second resin layers is not particularly limited. For example, the interlayer film for laminated glass may have a total of five resin layers, including four first resin layers and one second resin layer. For example, such a configuration can be achieved by using a plurality of first resin layers having different glass transition temperatures.

The interlayer film for laminated glass may have six or more layers, seven or more layers, eight or more layers, nine or more layers, or ten or more layers. Further, the interlayer film for laminated glass may have twenty layers or less, fifteen layers or less, ten layers or less, nine layers or less, eight layers or less, seven layers, or six layers or less.

In a preferred embodiment of the present invention, the interlayer film for laminated glass has a structure of five or more layers in which first resin layers and second resin layers are alternately laminated, and the first resin layers are present on the front surface and the back surface. When the interlayer film for laminated glass has a structure of five or more layers in which first resin layers and second resin layers are alternately laminated, and the first resin layers are present on the front surface and the back surface, the number of first resin layers is an odd number of three or more, and the number of second resin layers is an even number of two or more.

As shown in Fig. 1, the second resin layer preferably has a wedge-like shape in which the other edge A2 of the interlayer film for laminated glass has a larger thickness than the one edge A1. Since the second resin layer has such a wedge-like shape, as described in detail later, it is easier for the interlayer film for laminated glass to have a region of 0.5X in which a difference between a maximum value and a minimum value of a layer percentage A is 10% or less, and the sound insulation performance of the interlayer film for laminated glass can be enhanced.

When the interlayer film for laminated glass includes a plurality of second resin layers, it is preferred that at least one second resin layer has a wedge-like shape (i.e., in at least one second resin layer, the thickness of the other edge A2 is larger than the thickness of the one edge A1). Further, as long as at least one second resin layer has a wedge-like shape, the shape of the other second resin layers may be wedge-shaped or a shape other than wedge-shaped (for example, a rectangular shape). However, it is preferred that all the second resin layers have a wedge-like shape.

In the interlayer film 10 for laminated glass shown in Fig. 1, the first resin layers of the front surface and back surface and the two second resin layers have a wedge-like shape. On the other hand, the thickness of the first resin layer that is between the two second resin layers is smaller at the other edge than at the one edge. In this way, at least one layer in the interlayer film for laminated glass may have a shape in which the thickness of the other edge is smaller than the thickness of the one edge (a so-called "inverted wedge-like shape").

### <Layer percentage>

When the percentage of the total thickness of the second resin layer with respect to the total thickness of all the resin layers is taken to be a layer percentage A (%), and the distance from the one edge to the other edge is taken to be X, the interlayer film for laminated glass of the present invention has a region of 0.5X in which a difference between a maximum value and a minimum value of the layer percentage A is 10% or less.

As used herein, the distance X is the distance in the width direction of the interlayer film for laminated glass, with the one edge A1 as the starting point. Therefore, the portion where the distance X is 0 represents the one edge A1 portion, the portion where the distance X is X means the other edge A2, and the portion where the distance X is 0.5X means the center portion in the width direction.

The layer percentage A is the percentage (%) of the total thickness of the second resin layer with respect to the total thickness of all the resin layers in the interlayer film for laminated glass. For example, as shown in Fig. 2, the layer percentage A at the one edge A1 is the percentage (%) of the total thickness (a₁+a₂) of the second resin layers with respect to the total thickness T₀ of all resin layers. Further, the layer percentage A at the center portion in the width direction of the interlayer film for laminated glass is the percentage (%) of the total thickness (b₁+b₂) of the second resin layers with respect to the total thickness T_{0.5} of all resin layers.

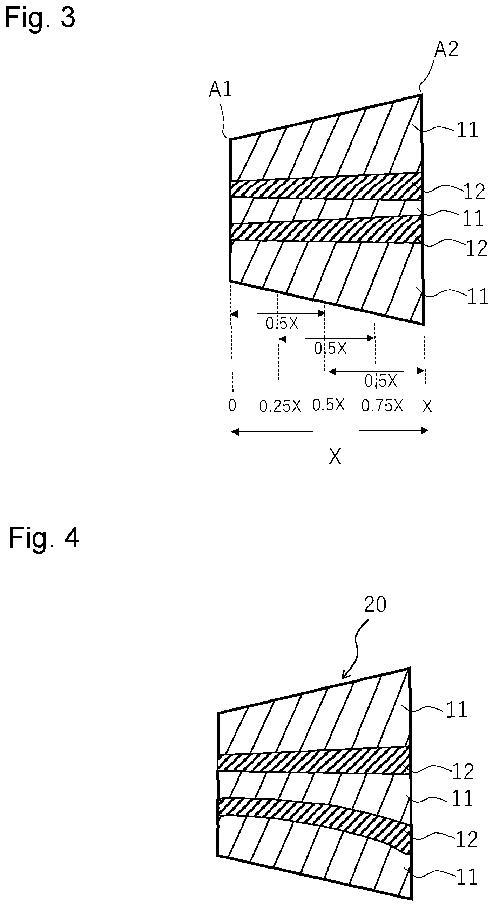

The interlayer film for laminated glass of the present invention has a region of 0.5X where the difference between the maximum value and the minimum value of the layer percentage A (%) is 10% or less. In other words, in the interlayer film for laminated glass of the present invention, it is required that the difference between the maximum value and the minimum value of the layer percentage A (%) be 10% or less in any 0.5X region. This means that the fluctuation in layer percentage A (%) is small in the 0.5X region. An interlayer film for laminated glass that satisfies this requirement has excellent sound insulation performance. The 0.5X region may be at least one region in the width direction of the interlayer film for laminated glass. For example, the 0.5X region may be, as shown in Fig. 3, a region from the one edge A1 (X=0) to 0.5X, or a region from 0.1X to 0.6X, a region from 0.25X to 0.75X, a region from 0.4X to 0.9X, or a region from 0.5X to the other edge A2 (X=1). The 0.5X region may be a region other than these.

From the viewpoint of increasing the uniformity of the sound insulation performance of the interlayer film for laminated glass, the difference between the maximum value and the minimum value of the layer percentage A (%) in the 0.5X region is preferably 5% or less, more preferably 3% or less, and further preferably 2% or less, and is usually 0% or more, for example 0.5% or more, or 1.0% or more.

Furthermore, it is preferred that the interlayer film for laminated glass has a region of 0.9X in which the difference between the maximum value and the minimum value of the layer percentage A (%) is 10% or less. In other words, in the interlayer film for laminated glass of the present invention, it is preferred that in at least one region of 0.9X the difference between the maximum value and the minimum value of the layer percentage A (%) is 10% or less. An interlayer film for laminated glass that satisfies this requirement has better sound insulation performance. Similar to as described above in relation to the 0.5X region, this 0.9X region may be at least one region.

From the viewpoint of increasing the sound insulation performance of the interlayer film for laminated glass, the difference between the maximum value and the minimum value of layer percentage A (%) in the 0.9X region is preferably 5% or less, more preferably 4 % or less, and further preferably 3% or less, and is usually 0% or more, for example 1.0% or more, or 1.5% or more.

Further, at the one edge of the interlayer film for laminated glass, the layer percentage A of the interlayer film for laminated glass is preferably 2% or more and 50% or less, more preferably 5% or more and 40% or less, further preferably 8% or more and 30% or less, and further preferably 10% or more and 20% or less.

In the interlayer film for laminated glass of the present invention, the distance X from the one edge to the other edge is not particularly limited, but is, for example, 600 mm or more and 20000 mm or less, preferably 700 mm or more and 1700 mm or less, and more preferably 800 mm or more and 1500 mm or less.

The method for setting the difference between the maximum value and the minimum value of the layer percentage A (%) in the 0.5X region and the difference between the maximum value and the minimum value of the layer percentage A (%) in the 0.9X region to a certain value or less is not particularly limited. Examples of the method include appropriately controlling the thickness of each layer by adjusting, when producing the interlayer film for laminated glass, a flow path gap immediately before the resin layers are merged in a feed block or a mold at each width direction (TD) coordinate. The thickness of each layer can be measured using a microscope (for example, a microscope "DSX500" manufactured by Olympus, or equivalent). Specifically, the interlayer film is cut in a direction perpendicular to a straight line from the one edge to the other edge to obtain a cross section in the thickness direction. This cross section is observed with a microscope, the boundaries of each resin layer are determined, and the thickness of each resin layer is calculated.

### <Embodiments other than Fig. 1>

The interlayer film for laminated glass of the present invention may be an embodiment other than the embodiment shown in Fig. 1.

As another embodiment, Fig. 4 shows an interlayer film 20 for laminated glass having a five-layer structure in which, from the front side, a first resin layer 11, a second resin layer 12, a first resin layer 11, a second resin layer 12, and a first resin layer are laminated in that order.

The two second resin layers in the interlayer film 10 for laminated glass shown in Fig. 1 have the same trapezoidal cross-sectional shape as each other, but a plurality of the second resin layers may have different shapes. As shown in Fig. 4, one of the second resin layers may have a trapezoidal cross-sectional shape, and the other second resin layer may have a curved cross-sectional shape. In this way, the interlayer film for laminated glass can have a layer structure that is symmetrical in the thickness direction, as shown in Fig. 1, or a layer structure that is asymmetrical in the thickness direction, as shown in Fig. 4. Here, "a layer structure that is symmetrical in the thickness direction" means that the layer structure is symmetrical with respect to a center line connecting the central portions of the thicknesses of the one edge and the other edge. Further, "a layer structure that is asymmetrical with respect to the thickness direction" means that the layer structure is asymmetrical with respect to the center line connecting the central portions of the thicknesses of the one edge and the other edge.

More specifically, the layer structure can be determined to be symmetrical when, with respect to the center line of the thickness, the structure of layers on one side and the opposite side is the same, and the thickness percentage (%) of each layer with respect to all the resin layers is calculated to find that the difference in thickness percentage (%) between the layer on one side and the layer on the opposite side with respect to the center line of the center portion of the thickness is 10% or less.

When the layer structure is symmetrical in the thickness direction, the physical properties of the front surface and back surface have little variation and are highly stable. On the other hand, when the layer structure is asymmetrical in the thickness direction, it is easier to adjust so that, if necessary, the front surface and back surface have different physical properties.

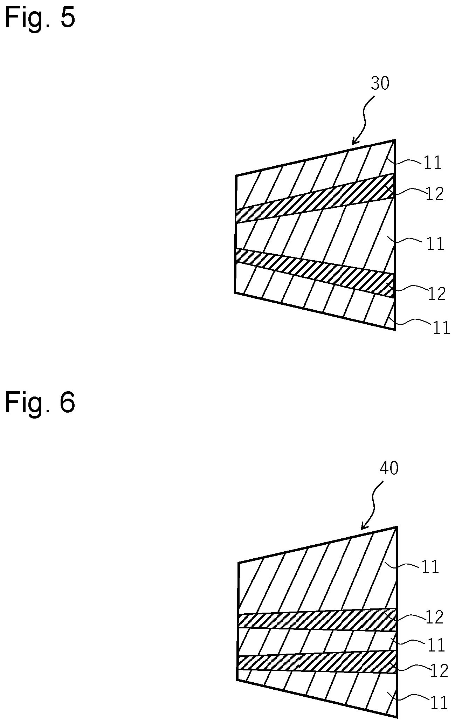

As yet another embodiment, Fig. 5 shows an interlayer film 30 for laminated glass having a five-layer structure in which, from the front side, a first resin layer 11, a second resin layer 12, a first resin layer 11, a second resin layer 12, and a first resin layer are laminated in that order.

The two second resin layers 12 and the first resin layer 11 between the two second resin layers 12 in Fig. 5 have a wedge-like shape, but the first resin layers 12 of the front surface and back surface do not have a wedge-like shape, and thickness at the one edge and the other edge is the same. In this case, it is possible to reduce the proportion of the first resin layers of the front surface and back surface in the thickest portion (i.e., other edge portion) of the interlayer film for laminated glass. Therefore, for example, even if an additive such as a coloring agent or a heat shielding agent is added to one or both of the first resin layers of the front surface and back surface, the visible light transmittance of the thickest portion can be maintained at a certain level or more. In addition, in Fig. 5, the shape of the first resin layers of the front surface and back surface is such that the thickness at the one edge and the other edge is the same, but the first resin layers of the front surface and back surface may have, for example, an inverted wedge-like shape.

As yet another embodiment, Fig. 6 shows an interlayer film 40 for laminated glass having a five-layer structure in which, from the front side, a first resin layer 11, a second resin layer 12, a first resin layer 11, a second resin layer 12, and a first resin layer 11 are laminated in that order. In the interlayer film 40 for laminated glass, the first resin layers of the front surface and back surface and the two second resin layers have a wedge-like shape. On the other hand, the first resin layer between the two second resin layers has an inverted wedge-like shape. Further, in the interlayer film 40 for laminated glass, the second resin layer is unevenly distributed on the back surface side, and the layer structure is asymmetrical in the thickness direction. The thickness of the first resin layer of the front surface of the interlayer film 40 for laminated glass is larger than the thickness of the first resin layer of the back surface. In such a case, it is easier to distinguish a difference in the roughness between the front surface and back surface by forming relatively small embossments on the back surface of the first resin layer while forming larger embossments on the front surface of the first resin layer. By doing so, for example, when producing laminated glass, one front surface of the interlayer film for laminated glass can be made to have a surface roughness suitable for degassing, and the other front surface can be positioned while sliding over the front surface of the glass, and thus it is possible to provide excellent deaeration performance while enhancing workability.

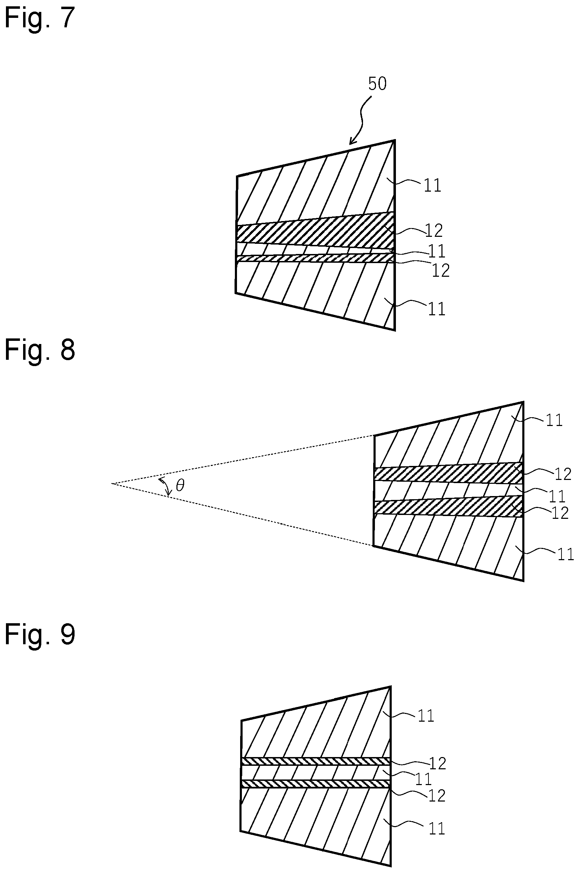

As yet another embodiment, Fig. 7 shows an interlayer film 50 for laminated glass having a five-layer structure in which, from the front side, a first resin layer 11, a second resin layer 12, a first resin layer 11, a second resin layer 12, and a first resin layer 11 are laminated in that order. In the interlayer film 50 for laminated glass, the first resin layers of the front surface and back surface and the two second resin layers have a wedge-like shape. On the other hand, the first resin layer between the two second resin layers has an inverted wedge-like shape. Further, the two second resin layers have different cross-sectional areas, and the cross-sectional area of the second resin layer of the front surface side is larger than the cross-sectional area of the second resin layer of the back surface side. In this way, even if the shapes of the plurality of second resin layers are different, by having a region of 0.5X where the difference between the maximum value and the minimum value of the layer percentage A is 10% or less as described above, it is possible to enhance sound insulation performance.

### <First resin layer and second resin layer>

The glass transition temperature of the first resin layer in the interlayer film for laminated glass of the present invention is 15°C or higher. By having a glass transition temperature of the first resin layer of 15°C or higher, the relatively soft second resin layer can be properly protected, good sound insulation properties can be maintained, and the handleability of the interlayer film for laminated glass is also enhanced. From this viewpoint, the glass transition temperature of the first resin layer is preferably 20°C or higher, more preferably 23°C or higher, further preferably 25°C or higher, and is preferably 50°C or lower, more preferably 45°C or lower, further preferably 40°C or lower, still more preferably 35°C or lower, and particularly preferably 30°C or lower. In addition, when a plurality of first resin layers are present, the glass transition temperatures of the plurality of first resin layers may be the same or different.

Further, it is preferred that at least one first resin layer includes a portion having a thickness of less than 300 µm, and it is more preferred that all the first resin layers include a portion having a thickness of less than 300 µm. An interlayer film in which a first resin layer includes a portion having a thickness of less than 300 µm has a different sound insulation performance compared to an interlayer film included of first resin layers having only portions of a thickness of 300 µm or more. Therefore, the sound insulation performance can be adjusted as necessary by using a resin layer including a portion having a thickness of less than 300 µm.

The thickness of the first resin layer at the one edge of the interlayer film for laminated glass of the present invention is not particularly limited, but is, for example, 10 µm or more and 1000 µm or less, preferably 50 µm or more and 500 µm or less, and more preferably 80 µm or more and 400 µm or less, and is, for example, 10 µm or more, preferably 50 µm or more, more preferably 80 µm or more, still more preferably 90 µm or more, and particularly preferably 100 µm or more, and, for example, 1000 µm or less, preferably 500 µm or less, and more preferably 400 µm or less. The thicknesses of the plurality of first resin layers may be the same or different.

It is preferred that the thickness of at least one first resin layer of the interlayer film for laminated glass changes linearly or non-linearly in the direction from the one edge to the other edge (usually, the width direction). Having such a first resin layer makes it easier to enhance sound insulation performance. Here, "the thickness changes non-linearly" means that there is a region in which the percentage (layer thickness percentage) of the thickness of the first resin layer with respect to the thickness of all the resin layers changes by 5% or more. Further, "the thickness changes linearly" means that the percentage (layer thickness percentage) of the thickness of the first resin layer with respect to the thickness of all the resin layers does not change by 5% or more in any region.

The glass transition temperature of the second resin layer in the interlayer film for laminated glass of the present invention is less than 15°C. By having a glass transition temperature of the second resin layer of less than 15°C, the sound insulation properties of the interlayer film for laminated glass are enhanced. From this viewpoint, the glass transition temperature of the second resin layer is preferably 10°C or lower, more preferably 5°C or lower, and further preferably 0°C or lower, and is preferably -20°C or higher, more preferably -18°C or higher, further preferably -15°C or higher, still more preferably -12°C or higher, and particularly preferably -10°C or higher, and is, for example -5°C or higher. In addition, when a plurality of second resin layers are present, the glass transition temperatures of the plurality of second resin layers may be the same or different.

The glass transition temperature (Tg) can be determined by dynamic viscoelasticity measurement as follows. Test pieces are obtained by peeling off each layer from an interlayer film for laminated glass having five or more resin layers. Each test piece obtained is stored for 12 hours at a room temperature of 23 ±2°C and a humidity of 25 ±5%. Next, the viscoelasticity is measured using a viscoelasticity measuring device "ARES-G2" manufactured by TA Instruments. Using parallel plates having a diameter of 8 mm as a jig, the measurement is performed in shear mode, under conditions of lowering the temperature from 100°C to -20°C at a cooling rate of 3 °C/min, at a frequency of 1 Hz and a strain of 1%. In the obtained measurement results, the peak temperature of the loss tangent is defined as the glass transition temperature Tg (°C).

The glass transition temperatures of the first resin layer and the second resin layer can be adjusted by appropriately adjusting the type of resin used in each resin layer, the composition of the resins, and the like. For example, the glass transition temperature can be increased by increasing the amount of hydroxyl groups in the polyvinyl acetal resin or by reducing the parts by mass of plasticizer.

Further, from the viewpoint of sound insulation performance, it is preferred that at least one second resin layer includes a portion having a thickness of 40 µm or more, and more preferred that all the second resin layers include a portion having a thickness of 40 µm or more.

The thickness of the second resin layer at the one edge of the interlayer film for laminated glass of the present invention is not particularly limited, but is, for example, 5 µm or more and 500 µm or less, preferably 10 µm or more and 350 µm or less, and more preferably 15 µm or more and 200 µm or less, and is, for example, 5 µm or more, preferably 10 µm or more, and more preferably 15 µm or more, and, for example, 500 µm or less, preferably 350 µm or less, more preferably 200 µm or less, and still more preferably 150 µm or less. The thicknesses of the plurality of second resin layers may be the same or different.

The thickness at one edge (total thickness of the first resin layer and second resin layer) of the interlayer film for laminated glass of the present invention is, for example, 100 µm or more and 3000 µm or less, preferably 200 µm or more and 2000 µm or less, and more preferably 500 µm or more and 1500 µm or less, and is, for example, 100 µm or more, preferably 200 µm or more, more preferably 500 µm or more, and further preferably 800 µm or more, and, for example, 3000 µm or less, preferably 2000 µm or less, more preferably 1500 µm or less, further preferably 1200 µm or less.

The thickness at the other edge (total thickness of the first resin layer and second resin layer) of the interlayer film for laminated glass of the present invention is, for example, 200 µm or more and 3100 µm or less, preferably 300 µm or more and 2100 µm or less, and more preferably 600 µm or more and 1600 µm or less, and is, for example, 200 µm or more, preferably 300 µm or more, more preferably 600 µm or more, and further preferably 700 µm or more, and, for example, 3100 µm or less, preferably 2100 µm or less, more preferably 1600 µm or less, further preferably 1300 µm or less, and still more preferably 1000 µm or less.

### <Wedge angle>

A wedge angle θ of the interlayer film for laminated glass of the present invention is preferably 0.05 mrad or more, preferably 0.10 mrad or more, more preferably 0.15 mrad or more, further preferably 0.20 mrad or more, and further preferably 0.25 mrad or more, and is preferably 2.0 mrad or less, more preferably 1.5 mrad or less, and further preferably 1.2 mrad or less. When an interlayer film for laminated glass having such a wedge angle is used for a head-up display, for example, double images tend to be suppressed.

As shown in Fig. 8, the wedge angle θ of the interlayer film for laminated glass is the interior angle at the intersection of the straight line connecting the maximum thickness portion and the minimum thickness portion of a first front surface (one front surface) of the interlayer film for laminated glass and the straight line connecting the maximum thickness portion and the minimum thickness portion of a second front surface (the other front surface).

If there are a plurality of maximum thickness portions, there are a plurality of minimum thickness portions, the maximum thickness portions are in a certain region, or the minimum thickness portions are in a certain region, the maximum thickness portion and the minimum thickness portion for determining the wedge angle θ are selected so that the calculated wedge angle θ is the largest.

### <Ten-point average roughness (Rzjis94)>

In the interlayer film for laminated glass of the present invention, the front surface preferably has embossments having a random or continuous uneven shape, and the embossments preferably have a ten-point average roughness (Rzjis94) of 1 µm or more and less than 100 µm. An interlayer film for laminated glass that includes a front surface having such a predetermined roughness has enhanced degassing properties and can suppress foaming between the glass and the interlayer film for laminated glass during the production of laminated glass. The ten-point average roughness (Rzjis94) of the embossments on the front surface is preferably 5 µm or more and 80 µm or less, more preferably 10 µm or more and 70 µm or less, further preferably 15 µm or more and 60 µm or less, further preferably 18 µm or more and 50 µm or less, and further preferably 20 µm or more and 40 µm or less. The ten-point average roughness (Rzjis94) of the embossments on the front surface is preferably 5 µm or more, more preferably 10 µm or more, further preferably 15 µm or more, further preferably 18 µm or more, and further preferably 20 µm or more, and is preferably 80 µm or less, more preferably 70 µm or less, further preferably 60 µm or less, further preferably 50 µm or less, and further preferably 40 µm or less.

When the ten-point average roughness of the embossments on the front surface is equal to or higher than the above lower limits, degassing properties during the production of laminated glass are further enhanced. In addition, when the 10-point average roughness of the embossments on the front surface is below the above upper limits, when producing laminated glass, the uneven portions will disappear more easily from the pressure bonding, and the interface between the glass and the interlayer film for laminated glass adheres more easily.

In the present invention, ten-point average roughness means the ten-point average roughness Rz. The larger the value of the "10-point average roughness Rzjis94" is, the rougher the surface is as a whole, and the smaller the value is, the smoother the surface is as a whole. The "ten-point average roughness Rzjis94" is measured in accordance with JIS B 0601-1994. For example, a "Surfcorder SE300" manufactured by Kosaka Laboratory Ltd. can be used as the measuring instrument for measuring the ten-point average roughness Rz. More specifically, the ten-point average roughness Rz can be calculated using a contact sensor with a tip radius of 2 µm and a tip angle of 60° under measurement conditions of a cutoff value of 2.5 mm at the time of measurement, a reference length of 2.5 mm, a measurement length of 12.5 mm, a preliminary length of 2.5 mm, and a contact sensor movement rate of 0.5 mm/sec in an environment of 23°C and 30 RH%. When the surface of the interlayer film is embossed with score lines, the ten-point average roughness (Rzjis94) is measured by moving the contact sensor toward a direction perpendicular to the direction of the score lines.

"The front surface has a continuous uneven shape" refers to a state in which the uneven shapes of the front surface are regularly arranged, and when the uneven shapes of the front surface are not regular, this means that the front surface has a random uneven shape.

More specifically, whether the front surface has a random uneven shape or a continuous uneven shape can be determined based on peak intensity by frequency analysis of the front surface.

Specifically, when frequency analysis is performed on a roughness profile having a data pitch of 0.004 mm or less, and at the frequency showing a maximum peak intensity P1 at 1/300 [1/µm] or less and at the frequency showing a second largest peak intensity P2 at 1/300 [1/µm] or less, a ratio P2/P1 is less than 0.5, the front surface has a continuous shape, and if P2/P1 is 0.5 or more, the front surface has a random shape. The frequency analysis of the front surface can be performed on front surface shape profile data obtained at 1 µm intervals obtained by measuring the roughness.

Similar to the front surface, the back surface of the interlayer film for laminated glass may have random or continuous uneven embossments having a ten-point average roughness (Rzjis94) of 1 µm or more and less than 100 µm. The ten-point average roughness (Rzjis94) of the embossments on the back surface is preferably 5 µm or more and 80 µm or less, more preferably 10 µm or more and 70 µm or less, further preferably 15 µm or more and 60 µm or less, further preferably 18 µm or more and 50 µm or less, and further preferably 20 µm or more and 40 µm or less. The ten-point average roughness (Rzjis94) of the embossments on the back surface is preferably 5 µm or more, more preferably 10 µm or more, further preferably 15 µm or more, further preferably 18 µm or more, and further preferably 20 µm or more, and is preferably 80 µm or less, more preferably 70 µm or less, further preferably 60 µm or less, further preferably 50 µm or less, and further preferably 40 µm or less.

The ten-point average roughness (Rzjis94) of the front surface and the back surface may be the same or different.

The method for forming embossments on the front surface or the back surface of the interlayer film for laminated glass is not particularly limited, and for example, the embossments may be formed on the interlayer film obtained by the production method described below by a lip embossing method, an embossment roll method, a calender roll method, or the like.

### <Difference between maximum value and minimum value of primary resonance frequency>

In the present invention, an interlayer film for laminated glass can also be provided that has five or more resin layers, wherein the thickness of the other edge is larger than the thickness of the one edge, and when the distance from the one edge to the other edge is taken as X, the absolute value of the difference between the maximum value and the minimum value of the primary resonance frequency at 20°C measured by mechanical impedance measurement (MIM) at positions of 0.25X, 0.5X, and 0.75X is 70 Hz or less.

By doing so, it is possible to provide a wedge-shaped interlayer film for laminated glass that has a uniform sound insulation performance in the width direction. The measurement by mechanical impedance measurement (MIM) can be performed in accordance with ISO 16940-2008.

From the viewpoint of enhancing sound insulation performance, the absolute value of the difference between the maximum value and the minimum value of the primary resonance frequency at 20°C measured by mechanical impedance measurement (MIM) at 0.25X, 0.5X, and 0.75X in the interlayer film for laminated glass is preferably 60 Hz or less, more preferably 50 Hz or less, further preferably 40 Hz or less, preferably 30 Hz or less, more preferably 20 Hz or less, and further preferably 10 Hz or less, is usually 0 Hz or more, and, for example, is 3 Hz or more.

The above-described interlayer film for laminated glass, in which the absolute value of the maximum value and the minimum value of the primary resonance frequency at 20°C measured by mechanical impedance measurement (MIM) is small, preferably includes, as described above, a first resin layer having a glass transition temperature of 15°C or higher and a second resin layer having a glass transition temperature of less than 15°C. Further, as described above, it is preferable to have a region of 0.5X in which the difference between the maximum value and the minimum value of the layer percentage A (%) is 10% or less.

The mechanical impedance measurement (MIM) of the interlayer film is performed as follow after producing laminated glass. The laminated glass is produced as follows.

An interlayer film having a width of 25 mm and a length of 300 mm, and two sheets of clear float glass having a thickness of 2.0 mm, a width of 25 mm, and a length of 300 mm conforming to JIS R3202 (2011) are prepared. Then, the interlayer film is sandwiched between the two sheets of clear float glass to obtain a laminated body. The obtained laminated body is placed in a rubber bag and degassed for 20 minutes at a vacuum level of 2.6 kPa, then transferred to an oven as it is in a degassed state, and further vacuum pressed while being held at 90°C for 30 minutes to subject the laminated body to preliminary pressure-bonding. The preliminarily pressure-bonded laminated body was pressure-bonded in an autoclave for 20 minutes at 135°C and a pressure of 1.2 MPa to obtain a laminated glass.

### <Resin layer materials>

It is preferred that each resin layer of the interlayer film for laminated glass of the present invention contains a thermoplastic resin.

### <Thermoplastic resin>

The thermoplastic resin is not particularly limited, and examples thereof include a polyvinyl acetal resin, an ethylene-vinyl acetate copolymer resin, an ionomer resin, a polyurethane resin, a thermoplastic elastomer, and the like.

### (Polyvinyl acetal resin)

The polyvinyl acetal resin is obtained by acetalizing a polyvinyl alcohol with an aldehyde. Further, the polyvinyl alcohol can be obtained, for example, by saponifying a polyvinyl ester such as a polyvinyl acetate. One type of polyvinyl acetal resin may be used alone, or two or more types may be used in combination.

The aldehyde used for acetalization is not particularly limited, but an aldehyde having from 1 to 10 carbon atoms is preferably used, an aldehyde having from 2 to 6 carbon atoms is more preferable, and an aldehyde having 4 carbon atoms is further preferable.

The aldehyde having from 1 to 10 carbon atoms is not particularly limited, and examples include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. Among these, n-butyraldehyde, n-hexylaldehyde, and n-valeraldehyde are preferable, and n-butyraldehyde is more preferable. These aldehydes may be used alone or in combination of two or more.

Further, as the polyvinyl alcohol, a polyvinyl alcohol having a degree of saponification of 80 to 99.8 mol% is generally used. The average degree of polymerization of polyvinyl alcohol is preferably 500 or more, and preferably 4000 or less, in order to adjust the average degree of polymerization of the polyvinyl acetal resin to be within a desired range. The average degree of polymerization of the polyvinyl alcohol is more preferably 1000 or more, and more preferably 3600 or less. The average degree of polymerization of the polyvinyl alcohol is determined by a method in accordance with JIS K6726 (1977) "Polyvinyl alcohol test method".

The number of carbon atoms of the acetal group contained in the polyvinyl acetal resin is not particularly limited, but is preferably from 1 to 10, more preferably from 2 to 6, and further preferably 4. Specifically, a butyral group is particularly preferred as the acetal group, and therefore, a polyvinyl butyral resin is preferable as the polyvinyl acetal resin.

The acetalization degree of the polyvinyl acetal resin contained in the first and second resin layers is preferably 40 mol% or more, and preferably 85 mol% or less. Further, the acetalization degree is more preferably 60 mol% or more, and more preferably 75 mol% or less. In addition, "acetalization degree" refers to the degree of butyralization when the acetal group is a butyral group and the polyvinyl acetal resin is a polyvinyl butyral resin.

The amount of hydroxyl groups in the polyvinyl acetal resin in the first resin layer is preferably 25 mol% or more, more preferably 28 mol% or more, and further preferably 30 mol% or more, and is preferably 40 mol% or less, and more preferably 35 mol% or less. When the amount of hydroxyl groups in the polyvinyl acetal resin is equal to or more than the lower limit, the adhesive strength of the interlayer film is increased, and when the amount of hydroxyl groups is equal to or less than the upper limit, the interlayer film becomes more flexible and can be handled more easily.

The amount of hydroxyl groups in the polyvinyl acetal resin in the second resin layer is preferably 20 mol% or more, and more preferably 22 mol% or more, and is preferably 30 mol% or less, more preferably 28 mol% or less, and further preferably 25 mol% or less. When the amount of hydroxyl groups in the polyvinyl acetal resin is equal to or more than the lower limit, reaction efficiency is high and productivity is excellent, and when the amount of hydroxyl groups is equal to or less than the upper limit, the sound insulation properties are enhanced.

The degree of acetylation (acetyl group content) of the polyvinyl acetal resin in the first resin layer is preferably 0.01 mol% or more, and more preferably 0.5 mol% or more, and is preferably 10 mol% or less, and more preferably 2 mol% or less. When the degree of acetylation is equal to or more than the lower limit, the compatibility between the polyvinyl acetal resin and the plasticizer is increased. When the degree of acetylation is equal to or less than the upper limit, the moisture resistance of the interlayer film and the laminated glass is increased.

The degree of acetylation (acetyl group content) of the polyvinyl acetal resin in the second resin layer is preferably 0.01 mol% or more, more preferably 0.1 mol% or more, further preferably 7 mol% or more, and further preferably 10 mol% or more, and is preferably 30 mol% or less, more preferably 25 mol% or less, and further preferably 20 mol% or less. When the degree of acetylation is equal to or more than the lower limit, the compatibility between the polyvinyl acetal resin and the plasticizer is increased. When the degree of acetylation is equal to or less than the upper limit, the moisture resistance of the interlayer film and the laminated glass is increased.

The amount of hydroxyl groups, the acetalization degree (the butyralization degree), and the degree of acetylation can be calculated from results measured by a method in accordance with JIS K6728 (1977) "Polyvinyl butyral test method".

The average degree of polymerization of the polyvinyl acetal resin contained in the first and second resin layers is preferably 500 or more, and preferably 4000 or less. By setting the average degree of polymerization to 500 or more, the penetration resistance of the laminated glass is good. Further, by setting the average degree of polymerization to 4000 or less, the laminated glass can be easily molded. The degree of polymerization is more preferably 1000 or more, and more preferably 3600 or less. The average degree of polymerization of the polyvinyl acetal resin is the same as the average degree of polymerization of polyvinyl alcohol used as a raw material, and can be determined from the average degree of polymerization of the polyvinyl alcohol.

### (Ethylene-vinyl acetate copolymer resin)

The ethylene-vinyl acetate copolymer resin may be a non-crosslinked ethylene-vinyl acetate copolymer resin or a high-temperature crosslinked ethylene-vinyl acetate copolymer resin. Examples of ethylene-vinyl acetate copolymer resins that can be used include ethylene-vinyl acetate modified resins such as a saponified ethylene-vinyl acetate copolymer, an ethylene-vinyl acetate hydrolysate, and the like.

The ethylene-vinyl acetate copolymer resin preferably has a vinyl acetate content as measured in accordance with JIS K 6730 (1995) "Ethylene-vinyl acetate resin test method" or JIS K 6924-2:1997 of 10% by mass or more and 50% by mass or less, and more preferably 20% by mass or more and 40% by mass or less. By setting the vinyl acetate content to be equal to or more than these lower limits, adhesion to the glass is increased, and when used for laminated glass, the penetration resistance of the laminated glass tends to enhance. Moreover, by setting the vinyl acetate content to be equal to or less than these upper limits, the breaking strength of the interlayer film for laminated glass is increased, and the impact resistance of the laminated glass is good.

### (Ionomer resin)

The ionomer resin is not particularly limited, and various ionomer resins can be used. Specific examples include an ethylene ionomer, a styrene ionomer, a perfluorocarbon ionomer, a telechelic ionomer, a polyurethane ionomer, and the like. Among these, an ethylene ionomer is preferable because the mechanical strength, durability, transparency, and the like of the laminated glass, which will be described later, are good, and because adhesion to glass is excellent.

It is preferable to use an ionomer of an ethylene/unsaturated carboxylic acid copolymer as the ethylene ionomer because transparency and toughness are excellent. The ethylene/unsaturated carboxylic acid copolymer is a copolymer that has at least a structural unit derived from ethylene and a structural unit derived from an unsaturated carboxylic acid, and may also have structural units derived from other monomers.

Examples of the unsaturated carboxylic acid include acrylic acid, methacrylic acid, maleic acid, and the like. Acrylic acid and methacrylic acid are preferable, and methacrylic acid is particularly preferable. Examples of other monomers include acrylic esters, methacrylic esters, 1-butene, and the like.

The ethylene/unsaturated carboxylic acid copolymer preferably has 75 to 99 mol% of structural units derived from ethylene and preferably 1 to 25 mol% of structural units derived from the unsaturated carboxylic acid, relative to a total of the structural units of the copolymer of 100 mol%.

The ionomer of the ethylene/unsaturated carboxylic acid copolymer is an ionomer resin obtained by neutralizing or crosslinking at least a part of the carboxyl groups of the ethylene/unsaturated carboxylic acid copolymer with a metal ion. The degree of neutralization of the carboxyl groups is usually 1 to 90%, and preferably 5 to 85%.

Examples of the ion source in the ionomer resin include an alkali metal such as lithium, sodium, potassium, rubidium, and cesium, and a polyvalent metal such as magnesium, calcium, and zinc. Sodium and zinc are preferable.

The method for producing the ionomer resin is not particularly limited, and the ionomer resin can be produced by a conventionally known production method. For example, in the case of using an ionomer of an ethylene/unsaturated carboxylic acid copolymer as the ionomer resin, for example, ethylene and an unsaturated carboxylic acid are subjected to radical copolymerization at high temperature and pressure to produce an ethylene/unsaturated carboxylic acid copolymer. Then, an ionomer of the ethylene/unsaturated carboxylic acid copolymer can be produced by reacting the ethylene/unsaturated carboxylic acid copolymer with a metal compound containing the above-described ion source.

### (Polyurethane resin)

Examples of the polyurethane resin include a polyurethane obtained by reacting an isocyanate compound with a diol compound, a polyurethane obtained by reacting an isocyanate compound with a diol compound, and a chain extender such as a polyamine, and the like. Moreover, the polyurethane resin may contain a sulfur atom. **In** that case, a part or all of the diols may be selected from polythiols and sulfur-containing polyols. The polyurethane resin can enhance adhesion to organic glass. Therefore, it is preferable to use a polyurethane resin when the glass plate is an organic glass.

### (Thermoplastic elastomer)

Examples of the thermoplastic elastomer include a styrene thermoplastic elastomer and an aliphatic polyolefin. The styrene thermoplastic elastomer is not particularly limited, and a known styrene thermoplastic elastomer can be used. The styrene thermoplastic elastomer generally has a styrene monomer polymer block that serves as a hard segment, and a conjugated diene compound polymer block or a hydrogenated block thereof that serves as a soft segment. Specific examples of the styrene thermoplastic elastomer include a styreneisoprene diblock copolymer, a styrene-butadiene diblock copolymer, a styrene-isoprene-styrene triblock copolymer, a styrene-butadiene/isoprene-styrene triblock copolymer, a styrene-butadiene-styrene triblock copolymer, and hydrogenated products thereof.

The aliphatic polyolefin may be a saturated aliphatic polyolefin or an unsaturated aliphatic polyolefin. The aliphatic polyolefin may be a polyolefin obtained from a chain olefin as a monomer, or may be a polyolefin obtained from a cyclic olefin as a monomer. From the viewpoint of effectively increasing the storage stability of a light-emitting layer, the aliphatic polyolefin is preferably a saturated aliphatic polyolefin.

Examples of the material of the aliphatic polyolefin include ethylene, propylene, 1-butene, trans-2-butene, cis-2-butene, 1-pentene, trans-2-pentene, cis-2-pentene, 1-hexene, trans -2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4- nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene, vinylcyclohexane, and the like.

### <Plasticizer>

Each resin layer in the present invention may further contain a plasticizer. Containing a plasticizer makes the resin layer flexible, and as a result, the flexibility of the interlayer film for laminated glass or the laminated glass can be enhanced, and the penetration resistance of the laminated glass can also be enhanced. In addition, it is also possible to exhibit high adhesion with a glass sheet. The plasticizer is particularly effective when included in a case where a polyvinyl acetal resin is used as the thermoplastic resin.

Examples of the plasticizer include organic ester plasticizers such as monobasic organic acid esters and polybasic organic acid esters, phosphorus plasticizers such as organic phosphate ester plasticizers and organic phosphite ester plasticizers, and the like. Among these, organic ester plasticizers are preferable.

Examples of the organic ester plasticizers include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapreate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, an oil-modified sebacic acid alkyd, a mixture of a phosphoric acid ester and an adipate ester, a mixed adipate ester, and the like. Examples of the mixed adipate ester include an adipate ester produced from two or more alcohols selected from alkyl alcohols having from 4 to 9 carbon atoms and cyclic alcohols having from 4 to 9 carbon atoms.

Among the above plasticizers, triethylene glycol-di-2-ethylhexanoate (3GO) is particularly suitably used.

The content of the plasticizer in the first resin layer is not particularly limited, but is, with respect to 100 parts by mass of the thermoplastic resin, preferably 10 parts by mass or more, more preferably 20 parts by mass or more, and further preferably 30 parts by mass or more, and is preferably 60 parts by mass or less, and more preferably 50 parts by mass or less. When the content of the plasticizer is equal to or more than the above lower limits, the flexibility of the interlayer film is increased, and the interlayer film is easier to handle. When the content of the plasticizer is equal to or less than the above upper limits, the penetration resistance of the laminated glass is enhanced.

The content of the plasticizer in the second resin layer is not particularly limited, but is, with respect to 100 parts by mass of the thermoplastic resin, preferably 30 parts by mass or more, more preferably 40 parts by mass or more, and further preferably 50 parts by mass or more, and is preferably 100 parts by mass or less, more preferably 90 parts by mass or less, and further preferably 85 parts by mass or less. When the content of the plasticizer is equal to or more than the above lower limits, the flexibility of the interlayer film is increased, and the interlayer film is easier to handle. When the content of the plasticizer is equal to or less than the above upper limits, the penetration resistance of the laminated glass is enhanced.

Each resin layer is mainly composed of a thermoplastic resin, or a thermoplastic resin and a plasticizer, and the total amount of the thermoplastic resin and the plasticizer in each resin layer is, based on the total amount of each resin layer, usually 70% by mass or more, preferably 80% by mass or more, and more preferably 90% by mass or more, and is less than 100% by mass.

### (Heat shielding agent)

The resin layers in the interlayer film for laminated glass of the present invention may contain a heat shielding agent. Including a heat shielding agent enhances the heat shielding properties of the interlayer film for laminated glass.

When using a heat shielding agent for interlayer film for laminated glass, the heat shielding agent may be contained in a first resin layer, a second resin layer, or both a first resin layer and a second resin layer, but it is preferred that the heat shielding agent is contained in at least one of the plurality of first resin layers.

Examples of the heat shielding agent include heat shielding particles. The heat shielding particles are composed of an inorganic material, and specific examples thereof include metal oxide particles and particles other than metal oxide particles, such as lanthanum hexaboride (LaB6) particles. Examples of metal oxide particles include tin oxide particles such as aluminum-doped tin oxide particles, indium-doped tin oxide particles, and antimony-doped tin oxide particles (ATO particles), zinc oxide particles such as gallium-doped zinc oxide particles (GZO particles), indium-doped zinc oxide particles (IZO particles), aluminum-doped zinc oxide particles (AZO particles), tin-doped zinc oxide particles, and silicon-doped zinc oxide particles, titanium oxide particles such as niobium-doped titanium oxide particles, indium oxide particles such as tin-doped indium oxide particles (ITO particles), and tungsten oxide particles such as sodium-doped tungsten oxide particles, cesium-doped tungsten oxide particles (CWO particles), thallium-doped tungsten oxide particles, and rubidium-doped tungsten oxide particles. Further, heat shielding particles other than these may be used. One type of heat shielding material may be used alone, or two or more types may be used in combination.

Among these, metal oxide particles are preferable because they have a high heat ray shielding function. It is more preferable to use at least one selected from ATO particles, GZO particles, ITO particles, and CWO particles, and further preferable to use ITO particles or CWO particles.

A preferable lower limit of the average particle diameter of the heat shielding particles is 10 nm, and a more preferable lower limit is 20 nm. A preferable upper limit is 100 nm, a more preferable upper limit is 80 nm, and an even more preferable upper limit is 50 nm. As used herein, "average particle diameter" indicates a volume average particle diameter. The average particle diameter can be measured using a particle size distribution measuring instrument ("UPA-EX150" manufactured by Nikkiso Co., Ltd.).

Examples of the heat shielding agent include a heat shielding compound. The heat shielding compound is an organic material or an organic-inorganic composite material that can absorb infrared rays, and is also called a "near-infrared absorber". The near-infrared absorber has an absorption maximum in the near-infrared region, and exhibits a maximum absorption even among the absorption maximums present in the wavelength region of 380 nm to 2500 nm. Specifically, the near-infrared absorber has a maximum absorption in a wavelength region of 720 nm or more, and preferably 750 nm or more and 2000 nm or less.

Examples of the heat shielding compound include one or more compounds (hereinafter, also referred to as "compound X") selected from a phthalocyanine compound, a naphthalocyanine compound, and an anthracyanine compound.

The phthalocyanine compound is a phthalocyanine or a phthalocyanine derivative having a phthalocyanine skeleton, and preferably contains a metal atom. The naphthalocyanine compound is naphthalocyanine or a naphthalocyanine derivative having a naphthalocyanine skeleton, and preferably contains a metal atom. The anthracyanine compound is an anthracyanine or an anthracyanine derivative having an anthracyanine skeleton, and preferably contains a metal atom.

In these compounds X, the metal atom is the central metal of the phthalocyanine skeleton, naphthalocyanine skeleton, and anthracyanine skeleton.

The heat shielding compound is preferably one or more selected from the phthalocyanine compound and the naphthalocyanine compound, and the phthalocyanine compound is more preferable.

Further, as the metal atom, a vanadium atom is preferable, and a phthalocyanine compound containing a vanadium atom is more preferable. The vanadium atom is usually present in a state in which an oxygen atom is bonded to the vanadium atom (V=O).

One type of the above-described heat shielding compounds may be used alone, or two or more types may be used in combination.

The content of the heat shielding agent in the resin layer containing the heat shielding agent is not particularly limited, but is, for example, 0.05% by mass or more and 1.5% by mass or less, preferably 0.10% by mass or more and 1.2% by mass or less, and more preferably 0.15% by mass or more and 0.9% by mass or less.

### (Coloring agent)

The resin layers in the interlayer film for laminated glass of the present invention may contain a coloring agent. By using a coloring agent, it is possible to color the laminated glass, increase the light-shielding properties of the laminated glass, and impart anti-glare properties.

When using a coloring agent in the interlayer film for laminated glass, the coloring agent may be contained in a first resin layer, a second resin layer, or both a first resin layer and a second resin layer, but it is preferred that the coloring agent is contained in at least one of the plurality of first resin layers.

The coloring agent used is not particularly limited, and colorants conventionally mixed in interlayer films for laminated glass can be used. Colorants of blue, yellow, red, green, purple, black, white, and the like can be used. The colorant may be a pigment or a dye.

Examples of the pigment include copper phthalocyanine pigments such as pigment blue, phthalocyanine pigments such as cobalt phthalocyanine pigment, anthraquinone pigments, perylene pigments, diketopyrrolopyrrole pigments, quinacridone pigments, perinone pigments, thioindigo pigments, isoindoline pigments, isoindolinone pigments, quinophthalone pigments, threne pigments, titanium oxide pigments, carbon blacks such as Pigment Black 7, and carbon materials such as graphene and carbon nanotubes.

Examples of dyes include azo dyes, cyanine dyes, triphenylmethane dyes, phthalocyanine dyes, anthraquinone dyes, naphthoquinone dyes, quinone imine dyes, methine dyes, azomethine dyes, squarylium dyes, acridine dyes, styryl dyes, coumarin dyes, quinoline dyes, nitro dyes, and the like. The dye may be a dispersed dye.

Among these, as pigments, phthalocyanine pigments, anthraquinone pigments, perylene pigments, and carbon black are preferable because they have high affinity with thermoplastic resins and are less susceptible to bleeding out. Further, as the dyes, anthraquinone dyes are preferable.

One type of coloring agent may be used alone, or two or more types may be used in combination.

The content of the coloring agent in the resin layer containing the coloring agent is preferably 0.01% by mass or more and 3.0% by mass or less, more preferably 0.02% by mass or more and 0.5% by mass or less, and further preferably 0.04% by mass or more and 0.3% by mass or less.

The resin layers in the present invention may contain additives other than those described above, and may contain additives such as an ultraviolet absorber, an antioxidant, a light stabilizer, an adhesive force regulator, an optical brightener, and a crystal nucleating agent.

### (Method for producing interlayer film)

The method for producing the interlayer film is not particularly limited. The interlayer film may be produced by a method similar to the method for producing conventional wedge interlayer films, and preferably is formed by extrusion molding. Specifically, each resin layer may be formed by extrusion molding a resin constituting each resin layer, or a resin composition containing an additive such as a plasticizer in addition to the resin. Further, it is preferable to form the interlayer film by coextrusion. Examples of means for merging the resins to form a multilayer interlayer film include a feed block method, a mold method, a lamination method, and the like.

### [Laminated glass]

The present invention further provides laminated glass. The laminated glass of the present invention includes a first laminated glass member, a second laminated glass member, and the above-described interlayer film for laminated glass, wherein the interlayer film for laminated glass is arranged between the first laminated glass member and the second laminated glass member.

### (First and second laminated glass members)

Examples of the first and second laminated glass members used in the laminated glass include a glass sheet. The glass sheet may be either an inorganic glass or an organic glass, but an inorganic glass is preferable. Examples of the inorganic glass include, but are not limited to, clear glass, float glass, tempered glass, colored glass, polished glass, patterned glass, wired glass, lined glass, ultraviolet absorbing glass, infrared reflecting glass, infrared absorbing glass, green glass, and the like.

As the organic glass, a glass that is generally referred to as "resin glass" is used, and examples thereof include various organic glass sheets such as a (meth)acrylic sheet like a polycarbonate sheet or a polymethyl methacrylate sheet, an acrylonitrile styrene copolymer sheet, an acrylonitrile butadiene styrene copolymer sheet, a polyester sheet such as a polyethylene terephthalate sheet, a fluorine resin sheet, a polyvinyl chloride sheet, a chlorinated polyvinyl chloride sheet, a polypropylene sheet, a polystyrene sheet, a polysulfone sheet, an epoxy resin sheet, a phenolic resin sheet, an unsaturated polyester resin sheet, and a polyimide resin sheet. The organic resin sheet may be subjected to an appropriate surface treatment.

The first and second laminated glass members may be made of the same kind of material or may be made of different materials. For example, one of the laminated glass members may be an inorganic glass and the other laminated glass member an organic glass, but it is preferred that the first and second laminated glass members are both either an inorganic glass or an organic glass.

The thickness of each glass sheet used for the first and second laminated glass members is not particularly limited, but is, for example, about 0.1 to 15 mm, and preferably 0.5 to 5 mm. The thickness of each glass sheet may be the same or different.

When the first and second laminated glass members have different thicknesses from each other, the difference in thickness between the laminated glass members may be 0.1 mm or more, and preferably 0.2 mm or more. Further, the difference in thickness between the first and second laminated glass members is not particularly limited, but may be, for example, 2 mm or less, and preferably 1 mm or less.

The first and second laminated glass members may be flat glass or curved glass. When one of the first and second laminated glass members is flat glass, it is preferred that the other is also flat glass, and when one is curved glass, it is preferred that the other is also curved glass.

For example, the curved glass preferably has a radius of curvature in the vertical direction of 4000 mm or more, more preferably 6000 mm or more, further preferably 8000 mm or more, and further preferably 10000 mm or less, and is preferably 25000 mm or less, more preferably 20000 mm or less, and further preferably 15000 mm or less.

The method for producing the laminated glass is not particularly limited. The laminated glass may be obtained by sandwiching an interlayer film between two laminated glass members and pressure-bonding them together.

More specifically, the interlayer film is sandwiched between the first and second laminated glass members, and the air remaining between the two glass members and the interlayer film is removed by passing the laminated glass members and the interlayer film through a pressure roll or placing them in a rubber bag and vacuum suctioning. Then, the laminated glass members and the interlayer film are preliminarily adhered at about 70 to 110°C to obtain a laminated body. Next, the laminated body is placed in an autoclave or pressed and pressure-bonded at about 120 to 150°C and a pressure of 1 to 1.5 MPa. **In** this way, the laminated glass can be obtained.

The laminated glass of the present invention can be used in various fields, for example, can be used for various types of window glass. More specifically, the laminated glass of the present invention can be used for the window glass of a vehicle such as an automobile, a railway carriage, an aircraft, and a ship, or for the window glass of a building. By using the interlayer film for laminated glass or laminated glass for various types of window glass, various images such as videos, messages, and logos can be displayed on window glass. Further, the laminated glass of the present invention may be used as a display for various electrical appliances, such as household electrical appliances. Among these uses, it is preferable to use the laminated glass of the present invention for window glass, and more preferably to use for the window glass of an automobile. Examples of the window glass of an automobile include any of a windshield, side window glass, and rear window glass.

For example, when used for window glass of a building, various images may be displayed by installing a light source device inside the building and irradiating the surface on the inner side of the window glass with light from the light source device. Similarly, when used for the window glass of a vehicle, the laminated glass of the present invention can be used for a head-up display that displays various images on the laminated glass.

### Examples

The present invention will now be explained in more detail with reference to examples, but the present invention is not limited to these examples in any way.

The various physical properties were measured and evaluated as follows.

### [Glass transition temperature]

The test piece was stored for 12 hours at a room temperature of 23 ±2°C. and a humidity of 25 ±5%. Next, the viscoelasticity was measured using a viscoelasticity measuring device "ARES-G2" manufactured by TA Instruments. Using parallel plates having a diameter of 8 mm as a jig, the measurement was performed in shear mode, under conditions of lowering the temperature from 100°C to -20°C at a cooling rate of 3 °C/min, at a frequency of 1 Hz and a strain of 1%. In the obtained measurement results, the peak temperature of the loss tangent was defined as the glass transition temperature (°C).

### [Thickness of each resin layer and layer percentage A]

The thickness of each resin layer and the layer percentage A were measured using a microscope "DSX500" manufactured by Olympus.

Regarding the "Difference between maximum value and minimum value of layer percentage A in region of 0.5X" in the tables, for the comparative examples, the region of 0.5X where the difference between the maximum value and the minimum value of the layer percentage A is the smallest was selected. Further, for the examples, the region of 0.5X was measured from 0.25X to 0.75X.

Further, regarding the "Difference between maximum value and minimum value of layer percentage A in region of 0.9X" in the tables, for the comparative examples, the region of 0.9X where the difference between the maximum value and the minimum value of the layer percentage A is the smallest was selected. Further, for the examples, the region of 0.9X was measured from 0.05X to 0.95X.

### [Ten-point average roughness (Rzjis94)]

The ten-point average roughness Rz of the polymer layer of the surface layer of the interlayer film for laminated glass was measured with a "Surfcorder SE300" manufactured by Kosaka Laboratory Ltd. using a contact sensor with a tip radius of 2 µm and a tip angle of 60° under measurement conditions of a cutoff value of 2.5 mm at the time of measurement, a reference length of 2.5 mm, a measurement length of 12.5 mm, a preliminary length of 2.5 mm, and a contact sensor movement rate of 0.5 mm/sec. The measurement was carried out in an environment of 23°C and 30 RH%. Further, the measurement was performed on both surfaces of the interlayer film for laminated glass.

### [Production of laminated glass]

The following mechanical impedance measurement and sound transmission loss were performed by using the interlayer films obtained in each example and comparative example to produce laminated glass. The laminated glass was produced as follows.

The obtained interlayer film was sandwiched between two sheets of clear glass (for the mechanical impedance measurement: 25 mm long × 300 mm wide × 2.0 mm thick; for sound transmission loss measurement: 1000 mm long × 1000 mm wide × 2.0 mm thick) to obtain a laminated body. The obtained laminated body was placed in a rubber bag and degassed for 20 minutes at a vacuum level of 2.6 kPa, then transferred to an oven as it is in a degassed state, and further vacuum pressed while being held at 90°C for 30 minutes to subject the laminated body to preliminary pressure-bonding. The preliminarily pressure-bonded laminated body was pressure-bonded in an autoclave for 20 minutes at 135°C and a pressure of 1.2 MPa to obtain laminated glass. The obtained laminated glass left in a room at 23°C and 30RH% for 8 weeks was used as a laminated glass for measuring mechanical impedance, and the obtained laminated glass left in a room at 23°C and 30RH% for 8 weeks was also used as a laminated glass for measuring sound transmission loss (STL).

### [Mechanical impedance measurement]

The primary resonance frequency was measured at positions of 0.25X, 0.5X, and 0.75X, respectively, of the interlayer film by mechanical impedance measurement (MIM), and the absolute value of the difference between the maximum value and the minimum value of the primary resonance frequency was determined. The measurement was performed on the laminated glass for measuring mechanical impedance, which had been prepared by leaving the laminated glass for 8 weeks under the conditions of 23°C and 30 RH% as described above, in accordance with ISO 16940-2008.

Specifically, the obtained laminated glass for measuring mechanical impedance was vibrated using a vibration generator for damping testing ("Vibration Device G21-005D" manufactured by Shinken Co., Ltd.). The vibration characteristics obtained therefrom were amplified using a mechanical impedance measurement device ("XG-81" manufactured by Rion Co., Ltd.), and the primary resonance frequency at 20°C was determined for each position by using an FFT spectrum analyzer ("FFT Analyzer SA-01A2" manufactured by Rion Co., Ltd.) to analyze the vibration spectrum. The maximum value and the minimum value among the determined primary resonance frequencies were identified, and the absolute value of the difference between the maximum value and the minimum value is shown in Tables 1 and 2.

### [Evaluation of sound insulation performance (sound transmission loss measurement)]

The sound insulation performance was evaluated based on the difference between a preset sound transmission loss (target sound transmission loss) and the measured sound transmission loss. The sound transmission loss was measured as follows using the laminated glass for sound transmission loss (STL) measurement, which had been prepared by leaving the laminated glass for 8 weeks under the conditions of 23°C and 30 RH% as described above.

The laminated glass for measuring sound transmission loss (STL) was placed between a first reverberation room which was a sound source room, and a second reverberation room which was a sound reception room, each compliant with ISO 10140-5 (2021). The first reverberation room and the second reverberation room were connected in a manner compliant with ISO 10140-5 (2021). The sound transmission loss was measured at 20°C using a sound transmission loss measuring device "Intensity Probe SI-50, Multi-Channel Analyzer SA-02" manufactured by Rion Co., Ltd. Specifically, the sound transmission loss (dB) compliant with JIS A1441-1 (2007) was measured by the intensity method. The center frequency was measured in a 1/3 octave band. The sound transmission loss was evaluated as follows based on the difference between the preset sound transmission loss (target sound transmission loss) at 2500 Hz and the measured sound transmission loss.

### (Evaluation)

AA: Lower than 0.4 dB
A: 0.4 dB or higher and lower than 0.6 dB
B: 0.6 dB or higher and lower than 0.7 dB
C: 0.7 dB or higher

The components used in each example and comparative example were as follows.

### (Polyvinyl acetal resin)

PVB 1: Polyvinyl butyral resin, average degree of polymerization 1700, hydroxyl group amount 30.3 mol%, acetylation degree 0.9 mol%, acetalization degree 68.8 mol%
PVB 2: Polyvinyl butyral resin, average degree of polymerization 3000, hydroxyl group amount 23.8 mol%, acetylation degree 12.4 mol%, acetalization degree 63.8 mol% (Plasticizer)
3GO: Triethylene glycol-di-2-ethylhexanoate

### (UV shielding agent)

Tinuvin 326 (manufactured by BASF)

### (Antioxidant)

BHT (2,6-di-t-butyl-p-cresol)

### <Resin compositions A1 and A3 for forming first resin layers>

A1: Resin composition obtained by mixing 100 parts by mass of PVB 1, 37 parts by mass of plasticizer (3GO), 0.2 parts by mass of UV shielding agent (Tinuvin 326), and 0.2 parts by mass of antioxidant (BHT).
A3: Resin composition obtained by mixing 100 parts by mass of PVB 1, 25 parts by mass of plasticizer (3GO), 0.2 parts by mass of UV shielding agent (Tinuvin 326), and 0.2 parts by mass of antioxidant (BHT).

### <Resin compositions A2 and A4 for forming second resin layers>

A2: Resin composition obtained by mixing 100 parts by mass of PVB 2, 76 parts by mass of plasticizer (3GO), 0.2 parts by mass of UV shielding agent (Tinuvin 326), and 0.2 parts by mass of antioxidant (BHT).
A4: Resin composition obtained by mixing 100 parts by mass of PVB 2, 85 parts by mass of plasticizer (3GO), 0.2 parts by mass of UV shielding agent (Tinuvin 326), and 0.2 parts by mass of antioxidant (BHT).

### [Examples 1 to 3]

Wedge-shaped interlayer films for laminated glass having a five-layer structure and a wedge angle θ of 0.7 mrad were obtained by coextruding the resin composition A1 for forming the first resin layers and the resin composition A2 for forming the second resin layers using a coextruder. The coextruder used was capable of adjusting the mold outlet gap asymmetrically with respect to the width direction, and capable of adjusting each resin layer and the interlayer film into a wedge shape as necessary.

As shown in Fig. 1, the obtained interlayer film for laminated glass was a laminated body in which a first resin layer, a second resin layer, a first resin layer, a second resin layer, and a first resin layer were laminated in that order, and in which the layer structure was symmetrical in the thickness direction. Further, the first resin layers on the front surface and back surface and the two second resin layers were each wedge-shaped, and the first resin layer between the two second resin layers was an inverted wedge shape. The results are shown in Table 1.

In Table 1, layer 1 is the layer on the front surface side, layer 5 is the layer on the back surface side, and the layers are laminated in order of layer 1, layer 2, layer 3, layer 4, and layer 5.

### [Example 4]

A wedge-shaped interlayer film for laminated glass having a five-layer structure and a wedge angle θ of 0.7 mrad was obtained by coextruding the resin composition A1 for forming the first resin layers and the resin composition A2 for forming the second resin layers using a coextruder. As shown in Fig. 4, the obtained interlayer film for laminated glass was a laminated body in which a first resin layer, a second resin layer, a first resin layer, a second resin layer, and a first resin layer were laminated in that order, and in which the layer structure was asymmetrical in the thickness direction.

### [Example 5]

A wedge-shaped interlayer film for laminated glass having a five-layer structure and a wedge angle θ of 0.7 mrad was obtained by coextruding the resin composition A1 for forming the first resin layers and the resin composition A2 for forming the second resin layers using a coextruder.

As shown in Fig. 5, the obtained interlayer film for laminated glass was a laminated body in which a first resin layer, a second resin layer, a first resin layer, a second resin layer, and a first resin layer were laminated in that order, and in which the layer structure was symmetrical in the thickness direction. Further, the two second resin layers and the first resin layer between the two second resin layers were each wedge-shaped. On the other hand, the first resin layers on the front surface and back surface were not a wedge shape, they were resins layers having a uniform thickness in the width direction with the same thickness at the one edge and the other edge. The results are shown in Table 1.

### [Example 6]

A wedge-shaped interlayer film for laminated glass having a five-layer structure and a wedge angle θ of 0.7 mrad was obtained by coextruding the resin composition A1 for forming the first resin layers and the resin composition A4 for forming the second resin layers using a coextruder.

As shown in Fig. 5, the obtained interlayer film for laminated glass was a laminated body in which a first resin layer, a second resin layer, a first resin layer, a second resin layer, and a first resin layer were laminated in that order, and in which the layer structure was symmetrical in the thickness direction. Further, the two second resin layers and the first resin layer between the two second resin layers were each wedge-shaped. On the other hand, the first resin layers on the front surface and back surface were not a wedge shape, they were resins layers having a uniform thickness in the width direction with the same thickness at the one edge and the other edge. The results are shown in Table 1.

### [Example 7]

A wedge-shaped interlayer film for laminated glass having a five-layer structure and a wedge angle θ of 0.7 mrad was obtained by coextruding the resin composition A3 for forming the first resin layers and the resin composition A2 for forming the second resin layers using a coextruder.

As shown in Fig. 5, the obtained interlayer film for laminated glass was a laminated body in which a first resin layer, a second resin layer, a first resin layer, a second resin layer, and a first resin layer were laminated in that order, and in which the layer structure was symmetrical in the thickness direction. Further, the two second resin layers and the first resin layer between the two second resin layers were each wedge-shaped. On the other hand, the first resin layers on the front surface and back surface were not a wedge shape, they were resins layers having a uniform thickness in the width direction with the same thickness at the one edge and the other edge. The results are shown in Table 1.

### [Comparative Example 1]

A wedge-shaped interlayer film for laminated glass having a five-layer structure and a wedge angle θ of 0.7 mrad was obtained by coextruding the resin composition A1 for forming the first resin layers and the resin composition A2 for forming the second resin layers using a coextruder.

As shown in Fig. 9, the obtained interlayer film for laminated glass was a laminated body in which a first resin layer, a second resin layer, a first resin layer, a second resin layer, and a first resin layer were laminated in that order, and in which the layer structure was symmetrical in the thickness direction. Further, the first resin layers on the front surface and back surface were both wedge-shaped, and the two second resin layers and the first resin layer between the two second resin layers were rectangular. The results are shown in Table 1.

### [Examples 8 and 9]

Wedge-shaped interlayer films for laminated glass having a five-layer structure and a wedge angle θ of 0.3 mrad were obtained by coextruding the resin composition A1 for forming the first resin layers and the resin composition A2 for forming the second resin layers using a coextruder.

As shown in Fig. 6, the obtained interlayer film for laminated glass was a laminated body in which a first resin layer, a second resin layer, a first resin layer, a second resin layer, and a first resin layer were laminated in that order, and in which the layer structure was asymmetrical in the thickness direction. Further, the first resin layers on the front surface and back surface and the two second resin layers were each wedge-shaped, and the first resin layer between the two second resin layers was an inverted wedge shape. The results are shown in Table 1.

### [Comparative Example 2]

A wedge-shaped interlayer film for laminated glass having a five-layer structure and a wedge angle θ of 0.3 mrad was obtained by coextruding the resin composition A1 for forming the first resin layers and the resin composition A2 for forming the second resin layers using a coextruder.

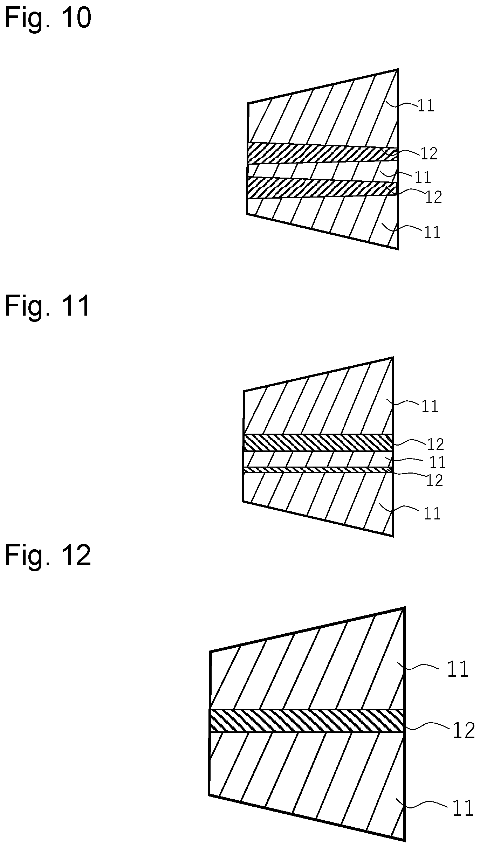

As shown in Fig. 10, the obtained interlayer film for laminated glass was a laminated body in which a first resin layer, a second resin layer, a first resin layer, a second resin layer, and a first resin layer were laminated in that order, and in which the layer structure was asymmetrical in the thickness direction. Further, the three first resin layers were each wedge-shaped, and the two second resin layers were both wedge-shaped. The results are shown in Table 1.

### [Examples 10 to 12]

Wedge-shaped interlayer films for laminated glass having a five-layer structure and a wedge angle θ of 1.0 mrad were obtained by coextruding the resin composition A1 for forming the first resin layers and the resin composition A2 for forming the second resin layers using a coextruder.

As shown in Fig. 7, the obtained interlayer film for laminated glass was a laminated body in which a first resin layer, a second resin layer, a first resin layer, a second resin layer, and a first resin layer were laminated in that order, and in which the layer structure was asymmetrical in the thickness direction. Further, the two second resin layers were wedge-shaped resin layers of different sizes. The first resin layers on the front surface and back surface were both wedge-shaped. The first resin layer between the two second resin layers was an inverted wedge shape. The results are shown in Table 2.

### [Example 13]

A wedge-shaped interlayer film for laminated glass having a nine-layer structure and a wedge angle θ of 1.0 mrad was obtained by coextruding the resin composition A1 for forming the first resin layers and the resin composition A2 for forming the second resin layers using a coextruder. The obtained interlayer film for laminated glass was a laminated body in which the front surface and back surface were the first resin layer, and first resin layers and second resin layers were alternately laminated. The results are shown in Table 2.

### [Comparative Example 3]

A wedge-shaped interlayer film for laminated glass having a five-layer structure and a wedge angle θ of 1.0 mrad was obtained by coextruding the resin composition A1 for forming the first resin layers and the resin composition A2 for forming the second resin layers using a coextruder.

As shown in Fig. 11, the obtained interlayer film for laminated glass was a laminated body in which a first resin layer, a second resin layer, a first resin layer, a second resin layer, and a first resin layer were laminated in that order, and in which the layer structure was asymmetrical in the thickness direction. Further, the first resin layers on the front surface and back surface were both wedge-shaped. The first resin layer between the two second resin layers was rectangular. In addition, the two second resin layers were rectangular resin layers of different sizes. The results are shown in Table 2.

### [Comparative Example 4]

A wedge-shaped interlayer film for laminated glass having a three-layer structure and a wedge angle θ of 1.0 mrad was obtained by coextruding the resin composition A1 for forming the first resin layers and the resin composition A2 for forming the second resin layer using a coextruder.

As shown in Fig. 12, the obtained interlayer film for laminated glass was a laminated body in which a first resin layer, a second resin layer, and a first resin layer were laminated in that order, and in which the layer structure was symmetrical in the thickness direction. Further, the first resin layers on the front surface and back surface were both wedge-shaped. The second resin layer was a rectangular resin layer. The results are shown in Table 2.

**Table 1**

| | | | Comparative Example 1 | Example 1 | Example 2 | Example 3 | Example 4 | Example 5 | Example 6 | Example 7 | Comparative Example 2 | Example 8 | Example 9 |
|---|---|---|---|---|---|---|---|---|---|---|---|---|---|
| Wedge angle θ of interlayer film | | mrad | 0.7 | 0.7 | 0.7 | 0.7 | 0.7 | 0.7 | 0.7 | 0.7 | 0.3 | 0.3 | 0.3 |
| Product width | | mm | 1000 | 1000 | 1000 | 1000 | 1000 | 1000 | 1000 | 1000 | 1000 | 1000 | 1000 |
| Thickness of one edge of interlayer film | | µm | 760 | 760 | 760 | 760 | 760 | 760 | 760 | 760 | 760 | 760 | 760 |
| Thickness of other edge of interlayer film | | µm | 1460 | 1460 | 1460 | 1460 | 1460 | 1460 | 1460 | 1460 | 1060 | 1060 | 1060 |
| Number oflayers in interlayer film | | - | 5 | 5 | 5 | 5 | 5 | 5 | 5 | 5 | 5 | 5 | 5 |
| Type of composition for forming first resin layers | | | A1 | A1 | A1 | A1 | A1 | A1 | A1 | A3 | A1 | A1 | A1 |
| Type of composition for forming second resin layers | | | A2 | A2 | A2 | A2 | A2 | A2 | A4 | A2 | A2 | A2 | A2 |
| Glass transition temperature Tg | First resin layers | °C | 27 | 27 | 27 | 27 | 27 | 27 | 27 | 40 | 27 | 27 | 27 |
| | Second resin layers | °C | -4 | -4 | -4 | -4 | -4 | -4 | -10 | -4 | -4 | -4 | -4 |
| Thickness of each layer at one edge | Layer 1 (first resin layer) | µm | 266 | 266 | 266 | 266 | 266 | 266 | 266 | 266 | 320 | 320 | 320 |
| | Layer 2 (second resin layer) | µm | 50 | 50 | 50 | 50 | 50 | 50 | 50 | 50 | 40 | 40 | 40 |
| | Layer 3 (first resin layer) | µm | 128 | 128 | 128 | 128 | 128 | 128 | 128 | 128 | 130 | 130 | 130 |
| | Layer 4 (second resin layer) | µm | 50 | 50 | 50 | 50 | 50 | 50 | 50 | 50 | 40 | 40 | 40 |
| | Layer 5 (first resin layer) | µm | 266 | 266 | 266 | 266 | 266 | 266 | 266 | 266 | 230 | 230 | 230 |
| | Layer 6 (second resin layer) | µm | - | - | - | - | - | - | - | - | - | - | - |
| | Layer 7 (first resin layer) | µm | - | - | - | - | - | - | - | - | - | - | - |
| | Layer 8 (second resin layer) | µm | - | - | - | - | - | - | - | - | - | - | - |
| | Layer 9 (first resin layer) | µm | - | - | - | - | - | - | - | - | - | - | - |
| Thickness percentage of each layer at one edge | Layer 1 (first resin layer) | % | 35.0 | 35.0 | 35.0 | 35.0 | 35.0 | 35.0 | 35.0 | 35.0 | 42.1 | 42.1 | 42.1 |
| | Layer 2 (second resin layer) | % | 6.6 | 6.6 | 6.6 | 6.6 | 6.6 | 6.6 | 6.6 | 6.6 | 5.3 | 5.3 | 5.3 |
| | Layer 3 (first resin layer) | % | 16.8 | 16.8 | 16.8 | 16.8 | 16.8 | 16.8 | 16.8 | 16.8 | 17.1 | 17.1 | 17.1 |
| | Layer 4 (second resin layer) | % | 6.6 | 6.6 | 6.6 | 6.6 | 6.6 | 6.6 | 6.6 | 6.6 | 5.3 | 5.3 | 5.3 |
| | Layer 5 (first resin layer) | % | 35.0 | 35.0 | 35.0 | 35.0 | 35.0 | 35.0 | 35.0 | 35.0 | 30.3 | 30.3 | 30.3 |
| | Layer 6 (second resin layer) | % | - | - | - | - | - | - | - | - | - | - | - |
| | Layer 7 (first resin layer) | % | - | - | - | - | - | - | - | - | - | - | - |
| | Layer 8 (second resin layer) | % | - | - | - | - | - | - | - | - | - | - | - |
| | Layer 9 (first resin layer) | % | - | - | - | - | - | - | - | - | - | - | - |
| Difference between maximum value and minimum value of layer percentage A in region of 0.5X | | % | 10.1 | 30 | 2.4 | 1.3 | 2.2 | 2.0 | 2.1 | 2.3 | 10.1 | 1.4 | 1.0 |
| Difference between maximum value and minimum value of layer percentage A in region of 0.9X | | % | 11.0 | 4.9 | 4.0 | 2.6 | 3.9 | 2.3 | 3.5 | 3.8 | 12.0 | 3.3 | 2.0 |
| Layer structure in thickness direction: symmetrical or asymmetrical | | - | symmetrical | symmetrical | symmetrical | symmetrical | asymmetrical | symmetrical | symmetrical | symmetrical | asymmetrical | asymmetrical | asymmetrical |
| Difference between maximum value and minimum value of prim ary resonance frequency at 20°C | | Hz | 52.5 | 19.5 | 15.0 | 7.8 | 15.5 | 5.0 | 13.2 | 14.0 | 54.0 | 16.6 | 9.1 |
| Ten-point average roughness (Rzjis94) (front surface on layer 1 side) | Minimum value | µm | 23 | 27 | 30 | 23 | 25 | 32 | 29 | 25 | 40 | 23 | 23 |
| | Maximum value | µm | 28 | 35 | 39 | 29 | 29 | 37 | 35 | 31 | 48 | 47 | 47 |
| Ten-point average roughness (Rzjis64) (front surface opposite to layer 1) | Minimum value | µm | 25 | 27 | 28 | 24 | 27 | 34 | 26 | 24 | 37 | 25 | 23 |
| | Maximum value | µm | 30 | 33 | 29 | 31 | 31 | 39 | 32 | 31 | 50 | 49 | 47 |
| Evaluation of sound insulation performance (STL at 2500 Hz) | Target sound transmission loss | dB | 40.6 | 40.6 | 40.6 | 40.6 | 40.6 | 40.6 | 40.6 | 40.6 | 40.3 | 40.3 | 40.3 |
| | Measured sound transmission loss | dB | 39.4 | 39.9 | 40.1 | 40.3 | 40.1 | 40.3 | 40.0 | 40.1 | 39.2 | 39.7 | 40.0 |
| | Evaluation (AA, A, B, C) | - | C | B | A | AA | A | AA | A | A | C | B | AA |

**Table 2**

| | | | Comparative Example 3 | Example 10 | Example 11 | Example 12 | Example 13 | Comparative Example 4 |
|---|---|---|---|---|---|---|---|---|
| Wedge angle θ of interlayer film | | m rad | 1.0 | 1.0 | 1.0 | 1.0 | 1.0 | 1.0 |
| Product width | | mm | 1000 | 1000 | 1000 | 1000 | 1000 | 1000 |
| Thickness of one edge of interlayer film | | µm | 800 | 800 | 800 | 800 | 800 | 800 |
| Thickness of other edge of interlayer film | | µm | 1800 | 1800 | 1800 | 1800 | 1800 | 1800 |
| Number of layers in interlayer film | | - | 5 | 5 | 5 | 5 | 9 | 3 |
| Type of composition for forming first resin layers | | | A1 | A1 | A1 | A1 | A1 | A1 |
| Type of composition for forming second resin layers | | | A2 | A2 | A2 | A2 | A2 | A2 |
| Glass transition temperature Tg | First resin layers | °C | 27 | 27 | 27 | 27 | 27 | 27 |
| | Second resin layers | °C | -4 | -4 | -4 | -4 | -4 | -4 |
| Thickness of each layer at one edge | Layer 1 (first resin layer) | µm | 300 | 300 | 300 | 300 | 282 | 375 |
| | Layer 2 (second resin layer) | µm | 100 | 100 | 100 | 100 | 25 | 50 |
| | Layer 3 (first resin layer) | µm | 90 | 90 | 90 | 90 | 32 | 375 |
| | Layer 4 (second resin layer) | µm | 20 | 20 | 20 | 20 | 25 | - |
| | Layer 5 (first resin layer) | µm | 290 | 290 | 290 | 290 | 32 | - |
| | Layer 6 (second resin layer) | µm | - | - | - | - | 25 | - |
| | Layer 7 (first resin layer) | µm | - | - | - | - | 32 | - |
| | Layer 8 (second resin layer) | µm | - | - | - | - | 25 | - |
| | Layer 9 (first resin layer) | µm | - | - | - | - | 282 | - |
| Thickness percentage of each layer at one edge | Layer 1 (first resin layer) | % | 37.5 | 37.5 | 37.5 | 37.5 | 35.3 | 46.9 |
| | Layer 2 (second resin layer) | % | 12.5 | 12.5 | 12.5 | 12.5 | 3.1 | 6.3 |
| | Layer 3 (first resin layer) | % | 11.3 | 11.3 | 11.3 | 11.3 | 4.0 | 46.9 |
| | Layer 4 (second resin layer) | % | 2.5 | 2.5 | 2.5 | 2.5 | 3.1 | - |
| | Layer 5 (first resin layer) | % | 36.3 | 36.3 | 36.3 | 36.3 | 4.0 | - |
| | Layer 6 (second resin layer) | % | - | - | - | - | 3.1 | - |
| | Layer 7 (first resin layer) | % | - | - | - | - | 4.0 | - |
| | Layer 8 (second resin layer) | % | - | - | - | - | 3.1 | - |
| | Layer 9 (first resin layer) | % | - | - | - | - | 35.3 | - |
| Difference between maximum value and minimum value of layer percentage A in region of 0.5X | | % | 11.3 | 2.0 | 1.8 | 1.0 | 1.3 | 1.5 |
| Difference between maximum value and minimum value of layer percentage A in region of 0.9X | | % | 14.0 | 5.3 | 3.4 | 1.6 | 2.6 | 2.3 |
| Layer structure in thickness direction: symmetrical or asymmetrical | | - | asymmetrical | asymmetrical | asymmetical | asymmetrical | symmetrical | symmetical |
| Difference between maximum value and minimum value of primary resonance frequency at 20°C | | Hz | 57.9 | 16.3 | 10.1 | 4.3 | 7.8 | 5.2 |
| Ten-point average roughness (Rzjis94) (front surface on layer 1 side) | Minimum value | µm | 19 | 30 | 44 | 18 | 23 | 35 |
| | Maximum value | µm | 25 | 32 | 52 | 50 | 29 | 43 |
| Ten-point average roughness (Rzjis94) (front surface opposite to layer 1) | Minimum value | µm | 22 | 33 | 47 | 21 | 26 | 31 |
| | Maximum value | µm | 26 | 33 | 53 | 47 | 30 | 45 |
| Evaluation of sound insulation performance (STL at 2500 Hz) | Target sound transmission loss | dB | 40.8 | 40.8 | 40.8 | 40.8 | 40.6 | 40.3 |
| | Measured sound transmission loss | dB | 39.5 | 40.2 | 40.4 | 40.6 | 40.3 | 39.2 |
| | Evaluation (AA, A, B, C) | - | C | B | A | AA | AA | C |

As described above, the laminated glass including the interlayer film for laminated glass of each of the examples satisfying the requirements of the present invention was found to have excellent sound insulation performance even in the case of a wedge-shaped interlayer film. In contrast, the wedge-shaped interlayer films for laminated glass of each of the comparative examples, which did not satisfy the requirements of the present invention, had poor sound insulation performance.

### Reference Signs List

- 10, 20, 30, 40, 50: interlayer film for laminated glass
- 11: first resin layer
- 12: second resin layer

## Claims

1. An interlayer film for laminated glass that comprises five or more resin layers, comprising:
a first resin layer having a glass transition temperature of 15°C or higher; and
a second resin layer having a glass transition temperature of lower than 15°C,
the interlayer film having one edge and the other edge opposite to the one edge,
a thickness of the other edge being larger than the thickness of the one edge, and
when a percentage of a total thickness of second resin layer with respect to the total thickness of all the resin layers is taken to be a layer percentage A (%), and a distance from the one edge to the other edge is taken to be X, the interlayer film for laminated glass comprising a region of 0.5X in which a difference between a maximum value and a minimum value of the layer percentage A is 10% or less.

2. The interlayer film for laminated glass according to claim 1, wherein the thickness of at least one first resin layer changes linearly or non-linearly in the direction from the one edge to the other edge.

3. The interlayer film for laminated glass according to claim 1 or 2, wherein at least one first resin layer comprises a portion having a thickness of less than 300 µm.

4. The interlayer film for laminated glass according to claim 1 or 2, wherein at least one second resin layer comprises a portion having a thickness of 40 µm or more.

5. The interlayer film for laminated glass according to claim 1 or 2, wherein a layer structure is symmetrical or asymmetrical in the thickness direction.

6. The interlayer film for laminated glass according to claim 1 or 2, wherein the thickness of at least one resin layer is smaller at the other edge than at the one edge.

7. The interlayer film for laminated glass according to claim 1 or 2, wherein a front surface comprises embossments having a random or continuous uneven shape, and the embossments have a ten-point average roughness (Rzjis94) of 1 µm or more and less than 100 µm.

8. The interlayer film for laminated glass according to claim 1 or 2, wherein the interlayer film comprises a structure of five or more layers in which the first resin layers and the second resin layers are alternately laminated.

9. The interlayer film for laminated glass according to claim 1 or 2, wherein the first resin layer is present on the front surface and a back surface.

10. An interlayer film for laminated glass that comprises five or more resin layers,
the interlayer film having one edge and the other edge opposite to the one edge,
a thickness of the other edge being larger than the thickness of the one edge, and
when a distance from the one edge to the other edge is taken as X, an absolute value of a difference between a maximum value and a minimum value of a primary resonance frequency at 20°C measured by mechanical impedance measurement (MIM) at positions of 0.25X, 0.5X, and 0.75X being 70 Hz or less.

11. Laminated glass comprising:
a first laminated glass member;
a second laminated glass member; and
the interlayer film for laminated glass according to claim 1 or 2, wherein
the interlayer film for laminated glass is arranged between the first laminated glass member and the second laminated glass member.
